# EUROPEAN PATENT SPECIFICATION

(11) **EP 4 508 260 B1**
(45) Date of publication and mention of the grant of the patent: **10.12.2025**
(21) Application number: 23713688.2
(22) Date of filing: 29.03.2023
(51) Int. Cl.: C25B 1/50, C01B 21/26, C01B 21/28, C01B 21/40

(54) **NITRIC ACID PLANT AND PROCESS WITH HEAT RECOVERY SYSTEM**
SALPETERSÄUREANLAGE UND VERFAHREN MIT WÄRMERÜCKGEWINNUNGSSYSTEM
INSTALLATION ET PROCÉDÉ D'ACIDE NITRIQUE AVEC SYSTÈME DE RÉCUPÉRATION DE CHALEUR

(30) Priority: 14.04.2022 EP 22168519
(43) Date of publication of application: 19.02.2025
(73) Proprietor: CASALE SA, 6900 Lugano (CH)
(72) Inventor: CEREA, Iacopo, 6900 Lugano (CH); FRANCESCHIN, Giada, 22100 Como (IT)
(74) Representative: M. Zardi & Co S.A.
(86) International application number: PCT/EP2023/058155
(87) International publication number: WO 2023/198455

(56) References cited:
- WO-A1-2018/162150
- WO-A1-2020/035521
- US-A- 3 977 832

## Description

### Field of application

The invention relates to the field of synthesis of nitric acid. Particularly the invention relates to a nitric acid process provided with a novel heat recovery system.

### Prior art

The industrial production of nitric acid involves the catalytic oxidation of ammonia over a suitable catalyst, which is typically a platinum/rhodium catalytic gauze. The catalytic oxidation is performed in the presence of an oxidant, typically by mixing a gaseous stream of ammonia NH₃ with a pre-heated current of air, to yield a gaseous effluent containing nitric oxides NO, NO₂. The gaseous effluent is then absorbed in water to produce nitric acid and a tail gas.

The catalytic oxidation of ammonia is carried out in a suitable ammonia oxidation reactor, also known as ammonia burner, that is supplied with ammonia and air.

In a nitric acid plant, ammonia is stored as a pressurized liquid and according to the process demand is evaporated and conveyed to the ammonia burner without requiring a dedicated compressor. On the contrary, air must be compressed prior to be conveyed to the ammonia burner. Typically, an ammonia burner operates at a pressure comprised between 4 and 12 barg.

The air compressor is typically a multi-stage compressor provided with multiple compressor stages that are configured to progressively increase the pressure of air from one stage to another.

In a nitric acid plant, the multistage compressor can be part of a turboset unit that includes an expander used to recover energy from the tail gas extracted from the absorption step and with a driver e.g. a steam turbine or an electrical motor which provides the balance of power required to operate the turboset unit which is not provided by the expander.

It is known that the air compression in a nitric acid plant requires a significant amount of power to run and in some plant configurations, intermediate cooling can be provided between each compression stage to remove heat developed from the compression so to make more efficient the compression operation and to reduce the power demand of the multistage compressor.

During the intermediate cooling, the air discharged from a compression stage is cooled by indirect heat transfer with a suitable cooling medium e.g. air or water (such as seawater when available). Typically, the cooling medium after removing heat from the air effluent from a compression stage is discharged outside the process.

Unfortunately, notwithstanding the technical solutions adopted e.g. the use of intermediate cooling between compression stages, the compression of air in a nitric acid plant still require a significant amount of power to run thus significantly contributing to the overall energy consumption of the plant.

Currently, there is a demand for nitric acid processes characterized by low energetic consumption and high energy efficiency.

US 3 977 832 discloses a system for control of a nitric acid plant. A plant for the production of nitric acid is described among others in WO 2018 162150 and WO 2020 035521.

### Summary of the invention

The invention aims to improve the energy efficiency and to reduce the energy consumption of the conventional nitric acid processes.

Accordingly, one aspect of the present invention is a process for the synthesis of nitric acid according to the claims.

The process for the synthesis of nitric acid comprises: a catalytic oxidation step of an ammonia feed in the presence of an oxidant to yield a nitrogen oxide-containing gas, an absorption step of said nitrogen oxide-containing gas in water to produce nitric acid and a tail gas.

In the process said oxidant is subjected to multiple compression steps prior to be conveyed to said catalytic oxidation step with said ammonia feed, said multiples compression steps comprise at least a first compression step and a second compression step and an inter-cooling stage is carried out between said first compression step and said second compression step.

Said intercooling stage comprises a first cooling step in which an effluent of said first compression step is cooled by indirect heat transfer with a first cooling medium selected from any one of the following: said tail gas effluent of said absorption step; a demineralised water stream; a trim cooling water and at least a portion of said ammonia feed.

In the invention, the heat removed from the effluent of a compression stage can be recovered and exploited in the process to warm-up other process fluids and/or to produce useful steam. Accordingly, the energy efficiency of the process is increased and the energy consumption of the process is reduced. This is a significant advantage over the prior art where the heat removed from air compression interstage is generally lost being transferred to cooling water. Among others, an aspect of the invention is the finding that process streams available in the nitric acid process, like e.g. the tail gas of the absorber or the ammonia feed, can be judiciously used as cooling mediums for inter-stage cooling in the oxidant (e.g. air) compression process. By using these process streams, the heat removed in the compression process remains within the process, therefore the process is more efficient energetically.

Another object of the invention is a nitric acid plant arranged to operate with the hereinabove disclosed process.

### Detailed description of the invention

The process uses a burner for the catalytic oxidation of an ammonia feed. The ammonia feed can be mixed with the oxidant prior to be fed to the burner or alternatively the ammonia feed and the oxidant can be injected directly into the burner as separate streams.

According to the invention, the oxidant is subjected to multiple compression steps before being supplied to the burner. The multiple compressor steps can be in the number of 2 to 6, preferably from 2 to 4, more preferably 2 or 3.

The multiple compression steps comprise at least a first compression step and a second compression step wherein between said first compression step and said second compression step an inter-cooling stage is carried out. In the inter-cooling step, the effluent of the first compression step is cooled before being supplied to the second compression step.

According to the invention said inter-cooling stage comprises at least a first cooling step with one of the following cooling mediums: a tail gas effluent of said absorption step, a demineralised water stream, the ammonia feed or a portion thereof.

According to a preferred embodiment of the invention, the inter-cooling stage further includes a second cooling step in which an effluent of said first cooling step is cooled by indirect heat transfer with a second cooling medium selected from any one of the following: a tail gas effluent of the absorption step, a demineralised water stream, a trim cooling water, at least a portion of the ammonia feed. The cooling medium used in said first cooling step and the cooling medium used in said second cooling step may be the same or different.

According to an embodiment of the invention, said second cooling stage can be followed by a third cooling step in which an effluent of said second cooling step is cooled by indirect heat transfer with a cooling medium which is preferably trim cooling water.

The first cooling step, the second cooling step and when applicable the third cooling step are preferably carried out in sequence in separate heat exchangers, for example shell and tube heat exchangers.

According to various embodiments of the invention, an inter-cooling stage may comprise one or more cooling steps with the same or different cooling fluid. Preferably, the cooling steps of an inter-cooling stage may use different cooling fluids wherein the sequence of cooling fluids is in accordance with the temperature of the fluids, the hotter fluids being used first and the colder fluids being used subsequently. According to an interesting embodiment, the first cooling medium is the tail gas effluent of the absorption step.

Preferably when the tail gas is used as a cooling medium after the inter-cooling stage the so obtained heated tail gas can be subjected to an expansion step to recover power. The recovered power can be exploited in the nitric acid synthesis process. This is a particularly advantageous example of a valuable use of the heat removed in the inter-stage cooling of compression.

Preferably, when the intercooling stage comprises a first cooling step and a second cooling step, the first cooling medium is a demineralised water and the second cooling medium is a trim cooling water.

Preferably, after heat transfer, said demineralised water is supplied to the deaerator or to the steam drum where steam is generated avoiding or limiting a low pressure steam consumption for the demineralised water pre-heating.

According to an alternative embodiment, said first cooling medium is a tail gas and said second cooling medium is a trim cooling water.

The trim cooling water is a particularly effective cooling because it is not dependent on the process demand e.g. it does not depend on the amount of ammonia that is oxidised in the burner (and tail gas withdrawn from the absorption step) and it does not depend on the amount of demineralized water flow. Therefore, it can be effectively used to compensate or to adjust the temperature of the effluent of a compression step prior to a subsequent compression step or prior to a catalytic oxidation step.

Furthermore, the trim cooling water can be advantageously used during the start-up operation especially when the amount of cooling medium such as the demineralized water flow is not sufficient to obtain an effective cooling of the effluent of a compression step.

According to another embodiment, said first cooling medium is a demineralised water stream and said second cooling medium is at least a portion of said ammonia feed.

Preferably the indirect heat transfer between the effluent of a compression step with one of the above-mentioned cooling mediums can be carried out in a gas-gas heat exchanger provided with a tube side and a shell side. Preferably, the cooling medium circulating in the shell-side of the heat exchanger while the effluent of a compression stage i.e. the oxidant, that is heated as a result of the compression operation, circulates in the tubes side of the heat exchanger.

Preferably, the temperature of said first cooling medium and when applicable of said second cooling medium and of said third cooling medium after the inter-cooling stage is increased of about 30 °C to 80 °C.

Preferably, the process for the synthesis of nitric acid is a mono-pressure nitric acid synthesis process. Preferably, the ammonia oxidation and the nitric acid absorption are carried out within the same pressure range. Preferably said nitric acid process is operated at a medium pressure comprised between 4 and 8 barg or at high-pressure comprised between 9 and 12 barg. The term barg denotes bar relative.

Preferably the oxidant used for the oxidation of ammonia is air or an oxygen-enriched air. More preferably the oxidant used for the oxidation of ammonia is air.

Preferably, the flow rate of air that is conveyed to the multiple compression steps is in the range of 10'000 Nm³/h to 165'000 Nm³/h.

Preferably, the temperature of said oxidant at the outlet of said multiple compression steps is in the range of 110 °C to 220 °C and the pressure of said oxidant at the outlet of said multiple compression steps is in the range of 4 to 12 barg.

According to a particular interesting application of the invention, said second cooling step and said third cooling step are carried out only during start-up operations.

The plant of the invention includes an ammonia burner arranged to perform a catalytic oxidation step of an ammonia feed in the presence of an oxidant, such as air, to yield a nitrogen oxide-containing gas, and an absorption step of said nitrogen oxide-containing gas in water to produce nitric acid and a tail gas.

The plant further includes a multiple-stage compressor arranged to raise the pressure of said oxidant prior to feed the oxidant to said catalytic oxidation step, the multiple-stage compressor includes at least a first compression stage and a second compression stage.

An inter-cooling stage is provided between said first compression stage and said second compression stage, wherein said inter-cooling stage comprises one or more heat exchanger arranged to cool the effluent of the first compression stage by indirect heat transfer with one or more of the following: a tail gas effluent of said absorption step, a demineralised water stream, a trim cooling water and at least a portion of said ammonia feed.

Accordingly, the inter-cooling heat exchanger (or each of the heat exchangers) has a hot side traversed by the effluent of the first compression stage and a cold side traversed by the respective cooling medium. Accordingly, the cold side has suitable connections with process lines of the plant. For example, when the tail gas is used, the cold side of the heat exchanger is suitably connected with the tail gas line.

A nitric acid plant according to the invention may be configured to implement the various embodiments which have been described above with reference to the process. For example, the inter-cooling section may include two or more heat exchangers arranged to use the same or different cooling medium.

In an embodiment, the inter-cooling section comprises:
a first intercooling heat exchanger arranged between a first compression stage and a second compression stage and using a stream of tail gas from the absorption tower as a cooling medium;
one or more heat exchanger(s) between subsequent pairs of compression stages, said one or more heat exchangers using, as a cooling medium, any of a demineralised water stream, trim cooling water, at least a portion of said ammonia feed.

In various embodiments of the invention, the demineralized water can be imported or can be taken, at least in part, from a condensate outlet of a steam turbine. Said water taken from a steam turbine condensate may have a temperature of 30 to 40 °C.

The tail gas is typically taken from top of an absorption column.

Transferring heat to the ammonia feed, or at least to a portion thereof, has the advantage of pre-heating the ammonia feed, which is generally in a liquid state and needs to be evaporated prior to feeding the ammonia burner.

The trim cooling water may be taken from a chilled water package of the nitric acid plant, for example a package arranged to cool the absorber. In some embodiments said chilled water package includes an absorption machine, such as Li-Br absorption machine.

## Claims

1. Process for the synthesis of nitric acid comprising:
a catalytic oxidation step of an ammonia feed in the presence of an oxidant, to yield a nitrogen oxide-containing gas, and an absorption step of said nitrogen oxide-containing gas in water to produce nitric acid and a tail gas, wherein:
said oxidant is subjected to multiple compression steps prior to be conveyed to said catalytic oxidation step, said multiple compression steps comprise at least a first compression step and a second compression step, wherein:
an inter-cooling stage is carried out between said first compression step and said second compression step, wherein said inter-cooling stage comprises at least:
a first cooling step in which an effluent of said first compression step is cooled by indirect heat transfer with a first cooling medium selected from any one of the following:
a) a stream of tail gas effluent from said absorption step;
b) a demineralised water stream;
c) at least a portion of said ammonia feed.

2. Process according to claim 1, wherein said inter-cooling stage further includes a second cooling step in which an effluent of said first cooling step is cooled by indirect heat transfer with a second cooling medium wherein the second cooling medium is selected from any one of the cooling mediums a to c) or the second cooling medium is trim cooling water.

3. Process according to claim 2, wherein said inter-cooling stage further includes a third cooling step in which an effluent of said second cooling step is cooled by indirect heat transfer with trim cooling water.

4. Process according to claim 2 or 3, wherein said first cooling step, said second cooling step and when applicable said third cooling step are carried out in sequence in separate shell and tube heat exchangers.

5. Process according to claim 1 or 2, wherein said first cooling medium is tail gas according to option a).

6. Process according to any of claims 2 to 4, wherein said first cooling medium is demineralised water according to option b) and said second cooling medium is trim cooling water.

7. Process according to any of claims 2 to 4, wherein said first cooling medium is tail gas according to option a) and said second cooling medium is trim cooling water.

8. Process according to any one of the claims 2 to 4, wherein said first cooling medium is demineralised water according to option b) and said second cooling medium is a portion of the ammonia feed according to option c).

9. Process according to claim 5 or 7, wherein said tail gas after said inter-cooling stage is expanded to recover power and power recovered from said tail gas expansion is exploited in the nitric acid synthesis process.

10. Process according to any of the previous claims, wherein the temperature of said first cooling medium and when applicable of said second cooling medium and of said third cooling medium after said inter-cooling stage is increased of about 30 °C to 80 °C.

11. Process according to any of the previous claims, wherein said nitric acid process is operated at medium pressure comprised between 4 and 8 barg or at high pressure comprised between 9 and 12 barg.

12. Process according to any of the previous claims, wherein said oxidant is air or oxygen-enriched air.

13. Process according to claim 12, wherein the flow rate of air is in the range of 10'000 Nm³/h to 165'000 Nm³/h.

14. Process according to any of the previous claims, wherein the temperature of said oxidant at the outlet of said multiple compression steps is in the range of 110 °C to 220 °C and the pressure of said oxidant at the outlet of said multiple compression steps is in the range of 2.4 to 12 barg.

15. Process according to any of claims 2 to 14, wherein said second cooling step and when applicable said third cooling step are carried out during a start-up phase.

16. A nitric acid plant adapted to operate with the process of any of claims 1 to 15, the plant comprising:
an ammonia burner arranged to perform a catalytic oxidation step of an ammonia feed in the presence of an oxidant, such as air, to yield a nitrogen oxide-containing gas, and an absorption tower of said nitrogen oxide-containing gas in water to produce nitric acid and a tail gas;
a multiple-stage compressor arranged to raise the pressure of said oxidant prior to feed the oxidant to said catalytic oxidation step, including at least a first compression stage and a second compression stage;
an inter-cooling section is provided between said first compression stage and said second compression stage, wherein said inter-cooling section comprises one or more heat exchangers arranged to cool the effluent of the first compression stage by indirect heat transfer with one or more of the following:
a stream of tail gas effluent from said absorption tower;
a demineralised water stream;
at least a portion of said ammonia feed.

17. A nitric acid plant according to claim 16 wherein said inter-cooling section comprises:
a first intercooling heat exchanger arranged between a first compression stage and a second compression stage and using a stream of tail gas from the absorption tower as a cooling medium;
one or more heat exchanger(s) between subsequent pairs of compression stages, said one or more heat exchangers using, as a cooling medium, any of a demineralised water stream, trim cooling water, at least a portion of said ammonia feed.

## Patentansprüche

1. Verfahren zur Synthese von Salpetersäure, umfassend:
einen katalytischen Oxidationsschritt einer Ammoniakzufuhr in Gegenwart eines Oxidationsmittels, um ein stickoxidhaltiges Gas zu erzeugen, und einen Absorptionsschritt, bei dem das stickoxidhaltige Gas in Wasser absorbiert wird, um Salpetersäure und ein Abgas zu erzeugen, wobei: das Oxidationsmittel vor seiner Zuführung zum katalytischen Oxidationsschritt mehreren Verdichtungsschritten unterzogen wird, wobei die mehreren Verdichtungsschritte mindestens einen ersten Verdichtungsschritt und einen zweiten Verdichtungsschritt umfassen, und wobei:
zwischen dem ersten Verdichtungsschritt und dem zweiten Verdichtungsschritt eine Zwischenkühlstufe durchgeführt wird, wobei die Zwischenkühlstufe mindestens Folgendes umfasst: einen ersten Kühlvorgang, bei dem ein Ausstrom des ersten Verdichtungsschritts durch indirekten Wärmeaustausch mit einem ersten Kühlmedium gekühlt wird, wobei das erste Kühlmedium aus einer der folgenden Optionen ausgewählt ist:
a) ein Strom von Abgas aus dem Absorptionsschrit;
b) ein Strom von demineralisiertem Wasser;
c) mindestens ein Teil der Ammoniakzufuhr.

2. Verfahren nach Anspruch 1, wobei die Zwischenkühlstufe weiterhin einen zweiten Kühlvorgang umfasst, bei dem ein Ausstrom des ersten Kühlvorgangs durch indirekten Wärmeaustausch mit einem zweiten Kühlmedium gekühlt wird, wobei das zweite Kühlmedium aus einem der Kühlmedien a bis c) ausgewählt ist oder das zweite Kühlmedium Trim Kühlwasser ist.

3. Verfahren nach Anspruch 2, wobei die Zwischenkühlstufe weiterhin einen dritten Kühlvorgang umfasst, bei dem ein Ausstrom des zweiten Kühlvorgangs durch indirekten Wärmeaustausch mit Trim Kühlwasser gekühlt wird.

4. Verfahren nach Anspruch 2 oder 3, wobei der erste Kühlvorgang, der zweite Kühlvorgang und gegebenenfalls der dritte Kühlvorgang nacheinander in separaten Rohrbündelwärmetauschern durchgeführt werden.

5. Verfahren nach Anspruch 1 oder 2, wobei das erste Kühlmedium Abgas gemäß Option a) ist.

6. Verfahren nach einem der Ansprüche 2 bis 4, wobei das erste Kühlmedium demineralisiertes Wasser gemäß Option b) ist und das zweite Kühlmedium Trim Kühlwasser ist.

7. Verfahren nach einem der Ansprüche 2 bis 4, wobei das erste Kühlmedium Abgas gemäß Option a) ist und das zweite Kühlmedium Trim Kühlwasser ist.

8. Verfahren nach einem der Ansprüche 2 bis 4, wobei das erste Kühlmedium demineralisiertes Wasser gemäß Option b) ist und das zweite Kühlmedium ein Teil der Ammoniakzufuhr gemäß Option c) ist.

9. Verfahren nach Anspruch 5 oder 7, wobei das Abgas nach der Zwischenkühlstufe expandiert wird, um Energie zurückzugewinnen, und die aus der Expansion des Abgases zurückgewonnene Energie im Salpetersäureherstellungsprozess genutzt wird.

10. Verfahren nach einem der vorhergehenden Ansprüche, wobei die Temperatur des ersten Kühlmediums und gegebenenfalls des zweiten und dritten Kühlmediums nach der Zwischenkühlstufe um etwa 30 °C bis 80 °C erhöht wird.

11. Verfahren nach einem der vorhergehenden Ansprüche, wobei das Salpetersäureverfahren bei mittlerem Druck zwischen 4 und 8 barg oder bei hohem Druck zwischen 9 und 12 barg betrieben wird.

12. Verfahren nach einem der vorhergehenden Ansprüche, wobei das Oxidationsmittel Luft oder sauerstoffangereicherte Luft ist.

13. Verfahren nach Anspruch 12, wobei die Luftdurchflussmenge im Bereich von 10.000 Nm³/h bis 165.000 Nm³/h liegt.

14. Verfahren nach einem der vorhergehenden Ansprüche, wobei die Temperatur des Oxidationsmittels am Ausgang der mehreren Verdichtungsschritte im Bereich von 110 °C bis 220 °C liegt und der Druck des Oxidationsmittels am Ausgang der mehreren Verdichtungsschritte im Bereich von 2,4 bis 12 barg liegt.

15. Verfahren nach einem der Ansprüche 2 bis 14, wobei der zweite Kühlvorgang und gegebenenfalls der dritte Kühlvorgang während einer Anfahrphase durchgeführt werden.

16. Salpetersäureanlage, ausgelegt für den Betrieb mit dem Verfahren nach einem der Ansprüche 1 bis 15, wobei die Anlage umfasst:
einen Ammoniakbrenner, der eingerichtet ist, einen katalytischen Oxidationsschritt einer Ammoniakzufuhr in Gegenwart eines Oxidationsmittels, wie Luft, durchzuführen, um ein stickoxidhaltiges Gas zu erzeugen, und einen Absorptionsturm, in dem das stickoxidhaltige Gas in Wasser absorbiert wird, um Salpetersäure und ein Abgas zu erzeugen; einen mehrstufigen Verdichter, der eingerichtet ist, den Druck des Oxidationsmittels zu erhöhen, bevor das Oxidationsmittel dem katalytischen Oxidationsschritt zugeführt wird, wobei der Verdichter mindestens eine erste Verdichtungsstufe und eine zweite Verdichtungsstufe umfasst; eine Zwischenkühlsektion, die zwischen der ersten Verdichtungsstufe und der zweiten Verdichtungsstufe vorgesehen ist, wobei die Zwischenkühlsektion einen oder mehrere Wärmetauscher umfasst, die eingerichtet sind, das Ausstromprodukt der ersten Verdichtungsstufe durch indirekten Wärmeaustausch mit einem oder mehreren der folgenden Medien zu kühlen:
einen Strom von Abgas aus dem Absorptionsturm;
einen Strom von demineralisiertem Wasser;
mindestens einen Teil der Ammoniakzufuhr.

17. Salpetersäureanlage nach Anspruch 16, wobei die Zwischenkühlsektion umfasst: einen ersten Zwischenkühlwärmetauscher, der zwischen einer ersten Verdichtungsstufe und einer zweiten Verdichtungsstufe angeordnet ist und einen Strom von Abgas aus dem Absorptionsturm als Kühlmedium verwendet; einen oder mehrere Wärmetauscher zwischen nachfolgenden Paaren von Verdichtungsstufen, wobei der/die Wärmetauscher als Kühlmedium einen Strom von demineralisiertem Wasser, Trim Kühlwasser oder mindestens einen Teil der Ammoniakzufuhr verwenden.

## Revendications

1. Procédé de synthèse d'acide nitrique comportant :
une étape d'oxydation catalytique d'une charge d'ammoniac en présence d'un oxydant, pour produire un gaz contenant de l'oxyde d'azote, et une étape d'absorption dudit gaz contenant de l'oxyde d'azote dans de l'eau pour produire de l'acide nitrique et un gaz résiduaire, dans lequel :
ledit oxydant est soumis à de multiples étapes de compression avant d'être transféré à ladite étape d'oxydation catalytique, lesdites multiples étapes de compression comportent au moins une première étape de compression et une deuxième étape de compression, dans lequel :
une phase de refroidissement intermédiaire est réalisée entre ladite première étape de compression et ladite deuxième étape de compression, dans lequel ladite phase de refroidissement intermédiaire comporte au moins :
une première étape de refroidissement dans laquelle un effluent de ladite première étape de compression est refroidi par transfert de chaleur indirect avec un premier milieu de refroidissement sélectionné parmi l'un quelconque des éléments suivants :
a) un flux d'effluent de gaz résiduaire provenant de ladite étape d'absorption ;
b) un flux d'eau déminéralisée ;
c) au moins une partie de ladite charge d'ammoniac.

2. Procédé selon la revendication 1, dans lequel ladite phase de refroidissement intermédiaire inclut en outre une deuxième étape de refroidissement dans laquelle un effluent de ladite première étape de refroidissement est refroidi par transfert de chaleur indirect avec un deuxième milieu de refroidissement, dans lequel le deuxième milieu de refroidissement est sélectionné parmi l'un quelconque des milieux de refroidissement a) à c) ou le deuxième milieu de refroidissement est de l'eau de refroidissement de compensation.

3. Procédé selon la revendication 2, dans lequel ladite phase de refroidissement intermédiaire inclut en outre une troisième étape de refroidissement dans laquelle un effluent de ladite deuxième étape de refroidissement est refroidi par transfert de chaleur indirect avec de l'eau de refroidissement de compensation.

4. Procédé selon la revendication 2 ou 3, dans lequel ladite première étape de refroidissement, ladite deuxième étape de refroidissement et, le cas échéant, ladite troisième étape de refroidissement sont réalisées en séquence dans des échangeurs thermiques à tubes et à calandre séparés.

5. Procédé selon la revendication 1 ou 2, dans lequel ledit premier milieu de refroidissement est un gaz résiduaire selon l'option a).

6. Procédé selon l'une quelconque des revendications 2 à 4, dans lequel ledit premier milieu de refroidissement est de l'eau déminéralisée selon l'option b) et ledit deuxième milieu de refroidissement est de l'eau de refroidissement de compensation.

7. Procédé selon l'une quelconque des revendications 2 à 4, dans lequel ledit premier milieu de refroidissement est un gaz résiduaire selon l'option a) et ledit deuxième milieu de refroidissement est de l'eau de refroidissement de compensation.

8. Procédé selon l'une quelconque des revendications 2 à 4, dans lequel ledit premier milieu de refroidissement est de l'eau déminéralisée selon l'option b) et ledit deuxième milieu de refroidissement est une partie de la charge d'ammoniac selon l'option c).

9. Procédé selon la revendication 5 ou 7, dans lequel ledit gaz résiduaire après ladite phase de refroidissement intermédiaire est dilaté pour récupérer de la puissance et la puissance récupérée à partir de la dilatation dudit gaz résiduaire est exploitée dans le procédé de synthèse d'acide nitrique.

10. Procédé selon l'une quelconque des revendications précédentes, dans lequel la température dudit premier milieu de refroidissement et, le cas échéant, dudit deuxième milieu de refroidissement et dudit troisième milieu de refroidissement après ladite phase de refroidissement intermédiaire est augmentée d'environ 30 °C à 80 °C.

11. Procédé selon l'une quelconque des revendications précédentes, dans lequel ledit procédé à l'acide nitrique est mis en œuvre à une pression moyenne comprise entre 4 et 8 barg ou à une pression élevée comprise entre 9 et 12 barg.

12. Procédé selon l'une quelconque des revendications précédentes, dans lequel ledit oxydant est de l'air ou de l'air enrichi en oxygène.

13. Procédé selon la revendication 12, dans lequel le débit d'air est dans la plage de 10 000 Nm³/h à 165 000 Nm³/h.

14. Procédé selon l'une quelconque des revendications précédentes, dans lequel la température dudit oxydant à la sortie desdites multiples étapes de compression est dans la plage de 110 °C à 220 °C et la pression dudit oxydant à la sortie desdites multiples étapes de compression est dans la plage de 2,4 à 12 barg.

15. Procédé selon l'une quelconque des revendications 2 à 14, dans lequel ladite deuxième étape de refroidissement et, le cas échéant, ladite troisième étape de refroidissement sont réalisées pendant une phase de démarrage.

16. Installation d'acide nitrique adaptée pour fonctionner avec le procédé selon l'une quelconque des revendications 1 à 15, l'installation comportant :
un brûleur d'ammoniac agencé pour réaliser une étape d'oxydation catalytique d'une charge d'ammoniac en présence d'un oxydant, tel que de l'air, pour produire un gaz contenant de l'oxyde d'azote, et une tour d'absorption dudit gaz contenant de l'oxyde d'azote dans de l'eau pour produire de l'acide nitrique et un gaz résiduaire ;
un compresseur à plusieurs étages agencé pour augmenter la pression dudit oxydant avant d'amener ledit oxydant vers ladite étape d'oxydation catalytique, incluant au moins un premier étage de compression et un deuxième étage de compression ;
une section de refroidissement intermédiaire est disposée entre ledit premier étage de compression et ledit deuxième étage de compression, dans laquelle ladite section de refroidissement intermédiaire comporte un ou plusieurs échangeurs thermiques agencés pour refroidir l'effluent du premier étage de compression par transfert de chaleur indirect avec un ou plusieurs des éléments suivants :
un flux d'effluent de gaz résiduaire provenant de ladite tour d'absorption ;
un flux d'eau déminéralisée ;
au moins une partie de ladite charge d'ammoniac.

17. Installation d'acide nitrique selon la revendication 16 dans laquelle ladite section de refroidissement intermédiaire comporte :
un premier échangeur thermique de refroidissement intermédiaire agencé entre un premier étage de compression et un deuxième étage de compression et utilisant un flux de gaz résiduaire provenant de la tour d'absorption comme milieu de refroidissement ;
un ou plusieurs échangeurs thermiques entre des paires d'étages de compression suivantes, lesdits un ou plusieurs échangeurs thermiques utilisant, comme milieu de refroidissement, l'un quelconque parmi un flux d'eau déminéralisée, de l'eau de refroidissement de compensation et au moins une partie de ladite charge d'ammoniac.
